# EUROPÄISCHE PATENTANMELDUNG

(11) **EP 2 420 713 A1**
(43) Veröffentlichungstag der Anmeldung: **22.02.2012**
(21) Anmeldenummer: 11187778.3
(22) Anmeldetag: 22.03.2011
(51) Int. Cl.: F16L 3/233, F16B 13/12, F16B 19/10, F16B 5/02

(54) **Vorrichtung zum Spannen von Gegenständen**

(30) Priorität: 22.03.2010 DE 102010003130
(62) Teilanmeldung aus: 11159279.6
(71) Anmelder: HILTI Aktiengesellschaft, 9494 Schaan (LI)
(72) Erfinder: Bönig, Stefan, 88147 Achberg-Esseratsweiler (DE); Stahel, Simon, 7000 Chur (CH); Durig, Markus, 6793 Gaschurn (AT); Frommelt, Markus, 9494 Schaan (LI)

(57) **Zusammenfassung**

Vorrichtung zum Spannen von Gegenständen (1690), mit einem Halteelement (1310) und einem Spannelement (1330), wobei das Halteelement (1310) Durchführungen (1320) aufweist, in welche das Spannelement (1330) einführbar und verrastbar ist.

## Beschreibung

### Technisches Gebiet

Die Erfindung betrifft eine Vorrichtung zur Befestigung eines ersten Gegenstandes an einem zweiten Gegenstand.

### Stand der Technik

Befestigungsvorrichtungen dienen oft zur Befestigung von Kabeln, Rohren oder ähnlichen Installationseinrichtungen an Wänden, Decken oder auf Befestigungsschienen. Derartige Installationseinrichtungen werden oft mit Hilfe von Kabelbindern oder Ähnlichem zu Bündeln gebunden und befestigt.

Aufgabe der Erfindung ist es, eine Vorrichtung zum Spannen von Gegenständen zur Verfügung zu stellen, mit welcher mehrere Installationseinrichtungen zuverlässig und zeitsparend miteinander verspannt werden können.

### Darstellung der Erfindung

Die Aufgabe wird gelöst mit einer Vorrichtung zum Spannen von Gegenständen, welche ein Halteelement mit Durchführungen und ein Spannelement aufweist, welches in die Durchführungen einführbar und verrastbar ist. Bevorzugt weist das Spannelement eine längliche Form auf, wobei beide Enden des Spannelements jeweils in eine Durchführung einführbar und verrastbar sind. Besonders bevorzugt ist das Spannelement ein Band. Das Spannelement ist bevorzugt aus Metall und/oder Kunststoff gefertigt, beispielsweise aus kunststoffummanteltem Metall.

Eine bevorzugte Ausführungsform ist dadurch gekennzeichnet, dass das Spannelement eine Rastnase, insbesondere eine Vielzahl von Rastnasen aufweist, welche in den Durchführungen einrasten. Bevorzugt weisen die Durchführungen einen unnachgiebigen Umfang auf, gegen den das Rastelement verrastet.

Eine bevorzugte Ausführungsform ist dadurch gekennzeichnet, dass die Rastelemente in einer Längsrichtung des Spannelements zueinander versetzt angeordnet sind. Dadurch kann der Abstand der Rastelemente entlang einer Längserstreckung des Spannelements verkürzt werden. Besonders bevorzugt ist der Abstand der Rastelelemente entlang der Längserstreckung des Spannelements kleiner als eine Länge jeweils eines Rastelements.

Eine bevorzugte Ausführungsform ist dadurch gekennzeichnet, dass die Durchführungen eine Einführschräge für das Spannelement aufweisen. Hierdurch wird ein Einführen des Spannelements in die Durchführungen erleichtert und unter Umständen die Rastfunktion unterstützt.

Eine bevorzugte Ausführungsform ist dadurch gekennzeichnet, dass mehrere Durchführungen für ein Ende des Spannelements vorgesehen sind. Hierdurch wird die Vorrichtung für verschiedene Abmessungen, insbesondere Durchmesser, der zu verspannenden Gegenstände einsetzbar.

Eine bevorzugte Ausführungsform ist dadurch gekennzeichnet, dass das Halteelement eine Befestigungsstelle aufweist, an der das Halteelement an einem Untergrund befestigbar ist. Eine weitere bevorzugte Ausführungsform ist dadurch gekennzeichnet, dass das Halteelement einen Trägerbereich aufweist, welcher die Durchführungen aufweist. Besonders bevorzugt sind die Befestigungsstelle und der Trägerbereich an gegenüberliegenden Seiten des Halteelements angeordnet.

Eine bevorzugte Ausführungsform ist dadurch gekennzeichnet, dass die Vorrichtung ein Befestigungselement aufweist. Besonders bevorzugt ist das Befestigungselement an der Befestigungsstelle vormontiert. Eine weitere bevorzugte Ausführungsform ist dadurch gekennzeichnet, dass das Halteelement und das Spannelement als vormontierte Einheit ausgebildet sind.

Eine bevorzugte Ausführungsform ist dadurch gekennzeichnet, dass das Befestigungselement eine Hülse und einen Dorn umfasst, wobei die Hülse ein erstes Lastangriffsmittel für den ersten Gegenstand und ein Widerlager für eine Aussenfläche des zweiten Gegenstands sowie einen Durchgang aufweist, wobei der Durchgang einen zu dem ersten Lastangriffsmittel benachbarten Einführabschnitt und einen Aufspreizabschnitt aufweist, wobei der Aufspreizabschnitt eine die Aussenabmessungen des Dornes unterschreitende Verengung aufweist. Besonders bevorzugt erstreckt sich die Verengung zumindest bis zu jener Stelle des Durchgangs, welche zu dem Widerlager am nächsten benachbart ist.

Eine bevorzugte Ausführungsform ist dadurch gekennzeichnet, dass das Befestigungselement einen Schlitten zur Befestigung an einer Schiene aufweist.

Eine bevorzugte Ausführung zeichnet sich dadurch aus, dass die Verengung den Durchgang von der dem Widerlager am nächsten benachbarten Stelle des Durchgangs zu dem zweiten Lastangriffsmittel hin zunehmend verengt. Besonders bevorzugt umfasst die Verengung einen konischen und/oder zylindrischen Abschnitt.

Eine bevorzugte Ausführung zeichnet sich dadurch aus, dass der Dorn frei beweglich in den Einführabschnitt einführbar ist.

Eine bevorzugte Ausführung zeichnet sich dadurch aus, dass die Hülse ein zu dem Aufspreizabschnitt benachbartes zweites Lastangriffsmittel für den zweiten Gegenstand aufweist.

Eine bevorzugte Ausführung zeichnet sich dadurch aus, dass die Vorrichtung ein Dichtelement für eine Abdichtung zwischen der Hülse und dem zweiten Gegenstand aufweist. Besonders bevorzugt ist das Dichtelement als Kunststoffformteil, Flächendichtung oder Dichtring mit kreisförmigem (O-Ring) oder abgeflachtem Querschnitt ausgebildet.

Eine bevorzugte Ausführung zeichnet sich dadurch aus, dass das erste Lastangriffsmittel ein Halteelement umfasst, welches insbesondere form- und/oder materialschlüssig an der Hülse angebracht ist. Besonders bevorzugt ist das Halteelement gegenüber der Hülse um eine Achse frei drehbar angeordnet und weist senkrecht zu der Achse einen asymmetrischen Querschnitt auf.

### Ausführungsbeispiele

Die Erfindung wird nachstehend anhand von Ausführungsbeispielen unter Bezugnahme auf die Zeichnungen näher erläutert. Es zeigen:
- Fig. 1: eine Befestigungsvorrichtung im Querschnitt,
- Fig. 2: ausschnittsweise eine Befestigungsvorrichtung im Querschnitt,
- Fig. 3: eine Befestigungsvorrichtung,
- Fig. 4: ein Hilfswerkzeug,
- Fig. 5: eine Befestigungsvorrichtung,
- Fig. 6: eine Befestigungsvorrichtung und ein Hilfswerkzeug,
- Fig. 7: eine Befestigungsvorrichtung im Querschnitt,
- Fig. 8: eine Befestigungsvorrichtung,
- Fig. 9: eine Befestigungsvorrichtung im Querschnitt,
- Fig. 10: eine Befestigungsvorrichtung,
- Fig. 11: eine Schlagvorrichtung im Querschnitt,
- Fig. 12: eine Schlagvorrichtung im Querschnitt,
- Fig. 13: eine Spannvorrichtung,
- Fig. 14: eine Spannvorrichtung im Querschnitt,
- Fig. 15: eine Spannvorrichtung,
- Fig. 16: eine Spannvorrichtung,
- Fig. 17: eine Spannvorrichtung,
- Fig. 18: ein Spannelement,
- Fig. 19: ein Spannelement,
- Fig. 20: eine Spannvorrichtung,
- Fig. 21: eine Spannvorrichtung,
- Fig. 22: eine Spannvorrichtung,
- Fig. 23: eine Spannvorrichtung,
- Fig. 24: eine Spannvorrichtung im Querschnitt,
- Fig. 25: eine Spannvorrichtung,
- Fig. 26: eine Spannvorrichtung,
- Fig. 27: eine Spannvorrichtung im Querschnitt,
- Fig. 28: eine Spannvorrichtung,
- Fig. 29: eine Spannvorrichtung,
- Fig. 30: eine Spannvorrichtung im Querschnitt und
- Fig. 31: eine Spannvorrichtung.

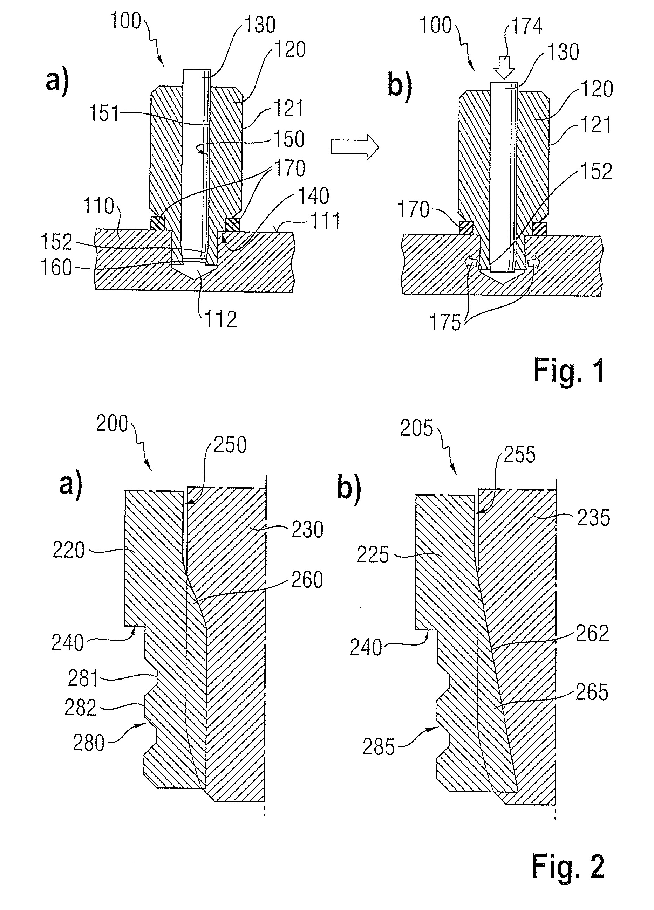

In Fig.1 ist eine Befestigungsvorrichtung 100 zur Befestigung eines nicht gezeigten ersten Gegenstandes an einem zweiten Gegenstand 110 dargestellt. Die Befestigungsvorrichtung 100 weist eine Hülse 120 und einem Dorn 130 auf, wobei die Hülse ein erstes Lastangriffsmittel 121 für den ersten Gegenstand und ein Widerlager 140 für eine Aussenfläche 111 des zweiten Gegenstands sowie einen Durchgang 150 aufweist, wobei der Durchgang 150 einen zu dem ersten Lastangriffsmittel 121 benachbarten Einführabschnitt 151 und einen Aufspreizabschnitt 152 aufweist, wobei der Aufspreizabschnitt 152 eine die Aussenabmessungen des Dornes unterschreitende Verengung 160 aufweist. Der Dorn 130 ist frei beweglich in den Einführabschnitt einführbar. Ein Dichtelement 170 ist für eine Abdichtung zwischen der Hülse 120 und dem zweiten Gegenstand 110 vorgesehen, um das Bohrloch 112 in dem zweiten Gegenstand 110 vor eindringenden Medien und somit insbesondere vor Korrosion zu schützen.

Ein Verfahren zur Befestigung des nicht gezeigten ersten Gegenstandes an dem zweiten Gegenstand 110 sieht vor, dass zunächst der zweite Gegenstand 110 mit dem Bohrloch 112 versehen wird. Danach wird die Hülse 120 in das Bohrloch 112 eingeführt. Schliesslich wird der Dorn 130 in den Einführabschnitt 151 (Fig. 1 a) und anschliessend entlang dem Pfeil 174 in den Aufspreizabschnitt 152 getrieben (Fig. 1 b). Gemäss einer besonders bevorzugten Ausgestaltung wird die Befestigungsvorrichtung bereits mit in dem Einführabschnitt vormontiertem Dorn ausgeliefert. Während des Eintreibvorgangs wird der in das Bohrloch 112 eingeführte Bereich der Hülse 120 in Richtung der Pfeile 175 gegen das Bohrloch aufgespreizt.

In Fig. 2a ist eine Hülse 220 einer Befestigungsvorrichtung 200 ausschnittsweise dargestellt, bei der sich die Verengung 260 über jene Stelle des Durchgangs 250 hinaus erstreckt, welche zu dem Widerlager 240 am nächsten benachbart ist. Hierdurch wird das gesamte Bohrloch in dem zweiten Gegenstand, insbesondere auch die oberflächennahe Wandung des Bohrlochs, für eine Verpressung genutzt. Weiterhin weist die Hülse 220 ein zu dem Aufspreizabschnitt benachbartes zweites Lastangriffsmittel 280 für den zweiten Gegenstand auf. Das Lastangriffsmittel 280 umfasst Rillen 281 und dazwischen liegende, bevorzugt umlaufende und insbesondere abgeflachte Vorsprünge 282 für eine verbesserte Klemmwirkung und/oder formschlüssige Befestigung der Hülse 220 in dem Bohrloch. Die Verengung 260 verengt den Durchgang 250 von der dem Widerlager 240 am nächsten benachbarten Stelle des Durchgangs 250 zu dem zweiten Lastangriffsmittel 280 hin zunehmend und weist einen zylindrischen Abschnitt 261 auf. Ein Dorn 230 ist in seiner Endposition gezeigt, so dass deutlich wird, dass die Verengung 260 mit ihren Innenabmessungen die Aussenabmessungen des Dornes 230 unterschreitet.

In Fig. 2b ist eine Hülse 225 einer Befestigungsvorrichtung 205 ausschnittsweise dargestellt, bei der sich die Verengung 265 über jene Stelle des Durchgangs 255 hinaus erstreckt, welche zu dem Widerlager 245 am nächsten benachbart ist. Weiterhin weist die Hülse 225 ein zu dem Aufspreizabschnitt benachbartes zweites Lastangriffsmittel 285 für den zweiten Gegenstand auf. Die Verengung 265 verengt den Durchgang 255 von der dem Widerlager 245 am nächsten benachbarten Stelle des Durchgangs 255 zu dem zweiten Lastangriffsmittel 285 hin zunehmend und weist einen konischen Abschnitt 262 auf. Ein Dorn 235 ist in seiner Endposition gezeigt, so dass deutlich wird, dass die Verengung 265 mit ihren Innenabmessungen die Aussenabmessungen des Dornes 235 unterschreitet.

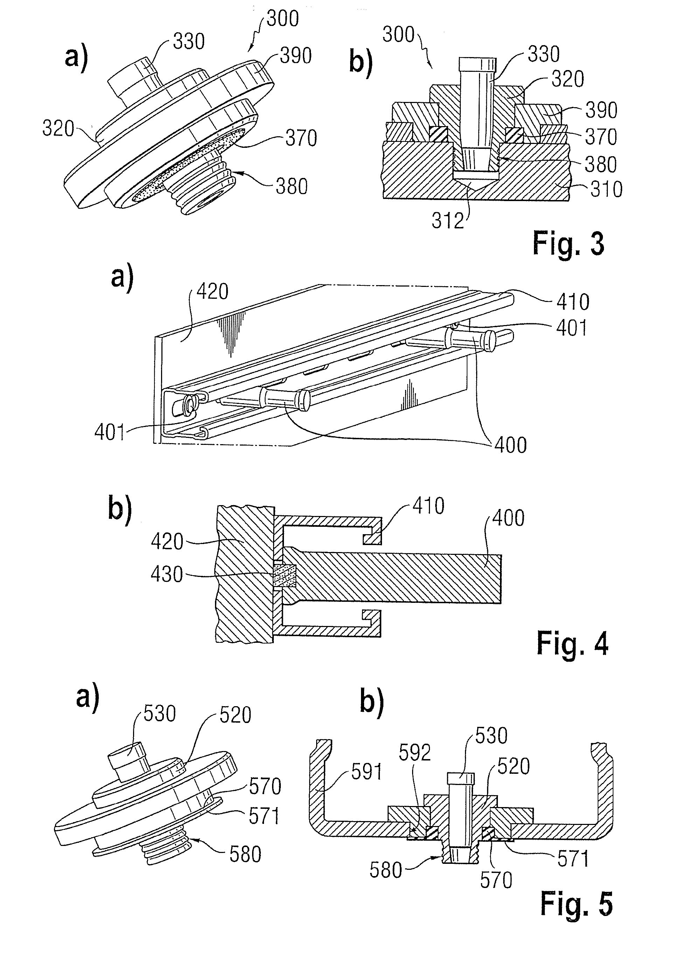

In Fig. 3 ist eine Befestigungsvorrichtung 300 dargestellt. Neben einer Hülse 320, einem Dorn 330, einem Dichtelement 370 und einem zweiten Lastangriffsmittel 380 für eine Verankerung in einem Bohrloch 312 in dem zweiten Gegenstand 310 weist die Befestigungsvorrichtung 300 ein Halteelement 390 auf. Das Halteelement 390 ist an einem Absatz 321 der Hülse 320 abgestützt und somit formschlüssig an der Hülse 320 angebracht.

In Fig. 4 ist ein Hilfswerkzeug 400 dargestellt, mit dessen Hilfe eine Schiene 410 vorübergehend an einem Untergrund 420 gehalten wird. Ein oder mehrere Längsschlitze der Schiene 410 werden dazu an zuvor erzeugten Bohrlöchern ausgerichtet und mit den Hilfswerkzeugen 400 gehalten. Für eine Anwendung auf Stahl oder anderen ferromagnetischen Untergründen weist das Hilfswerkzeug 400 hierzu einen Magneten 430 auf. Anschliessend werden Befestigungsvorrichtungen 401 in den Bohrlöchern verankert und die Hilfswerkzeuge wieder abgenommen.

In Fig. 5 ist eine Befestigungsvorrichtung 500 dargestellt. Neben einer Hülse 520, einem Dorn 530 und einem zweiten Lastangriffsmittel 580 weist die Befestigungsvorrichtung 500 ein Dichtelement 570 auf, welches eine umlaufende Lippe 571 aufweist. Die Lippe 571 dient zunächst einer formschlüssigen Halterung der Befestigungsvorrichtung 500 in einem Loch oder Schlitz 592 eines Befestigungselementes, beispielsweise einer Schiene 591. Das Befestigungselement 500 wird hierzu schräg in den Schlitz 592 derart eingeschoben, dass die Lippe 571 in den Schlitz 592 einschnappt. Das Befestigungselement 500 lässt sich dann noch bevorzugt längs des Schlitzes 592 verschieben. Anschliessend wird das Befestigungselement 500 mit der vormontierten Schiene 591 in eine vorgebohrte Sacklochbohrung im Untergrund gesteckt. Danach wird der Dorn 530 eingetrieben, so dass die Hülse 520 radial verspreizt und somit die Schiene 591 befestigt ist. Die Lippe 571 wirkt nun als Abdichtung zwischen der Schiene 591 und dem Untergrund, neben der Dichtwirkung des Dichtelementes 570 zwischen dem Untergrund und der Hülse 520.

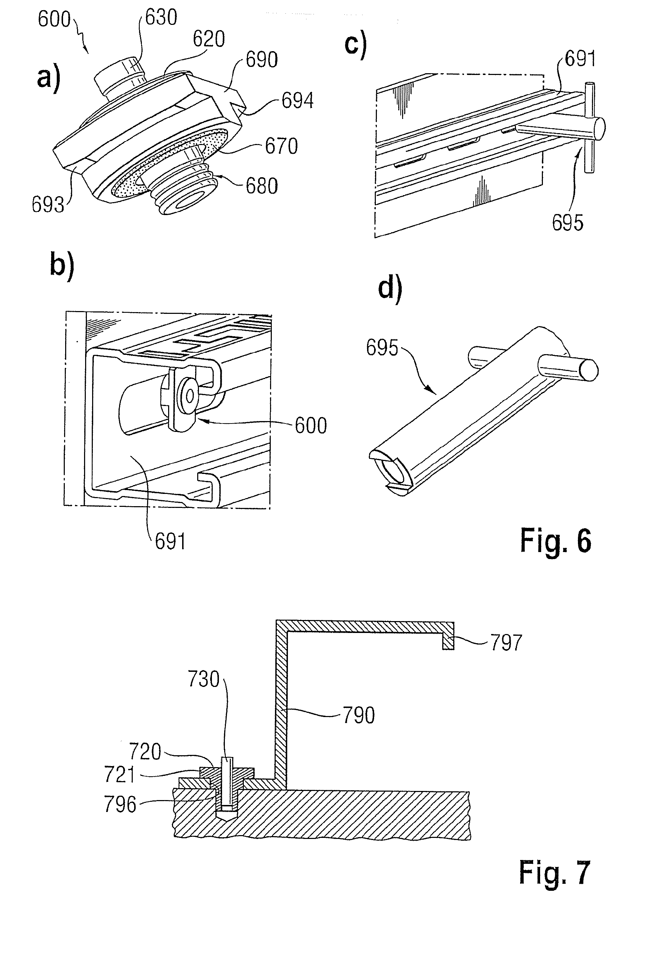

In Fig. 6 ist eine Befestigungsvorrichtung 600 dargestellt. Neben einer Hülse 620, einem Dorn 630, einem Dichtelement 670 und einem zweiten Lastangriffsmittel 680 weist die Befestigungsvorrichtung 600 ein Halteelement 690 auf. Das Halteelement 690 ist an einem nicht gezeigten Absatz der Hülse 620 frei drehbar abgestützt und somit formschlüssig an der Hülse 620 angeordnet. Das Halteelement 690 weist senkrecht zu einer Längsachse der Hülse 620 einen asymmetrischen Querschnitt auf. Insbesondere weist das Halteelement 690 zwei Niederhalter 693, 694 auf, welche in zwei entgegen gesetzten Richtungen senkrecht zur Längsachse der Hülse 620 von dem Halteelement abragen.

Das Befestigungselement 600 wird zunächst im Untergrund verankert. Danach wird eine Schiene 691 mit einem Längsschlitz zu den Niederhaltern 693, 694 ausgerichtet und in das Befestigungselement 600 eingefädelt. Mit einem Hilfswerkzeug 695, beispielsweise einem Gabel- oder Steckschlüssel) wird das Halteelement 690 um etwa 90° verdreht, so dass die Schiene 691 mit Hilfe der Niederhalter 693, 694 formschlüssig am Untergrund befestigt ist. Um ein Zurückdrehen der Niederhalter 693, 694 zu verhindern, ist besonders bevorzugt eine Verrastung zwischen dem Befestigungselement 600 und der Schiene 691 vorgesehen. Die Verrastung umfasst beispielsweise eine Nase am Befestigungselement und eine Nut in der Schiene.

In Fig. 7 ist eine Befestigungsvorrichtung 700 dargestellt, welche eine Hülse 720, einen Dorn 730 und ein Halteelement 790 aufweist. Das Halteelement 790 ist mit einem Durchbruch 796 an einem Absatz 721 der Hülse 720 abgestützt und somit formschlüssig an der Hülse 720 angebracht. Das Halteelement 790 ist bügelförmig ausgebildet und dient beispielsweise der Halterung einer nicht dargestellten Schiene, welche mittels eines Vorsprungs 797 des Halteelementes 790 an einem Herausrutschen gehindert ist.

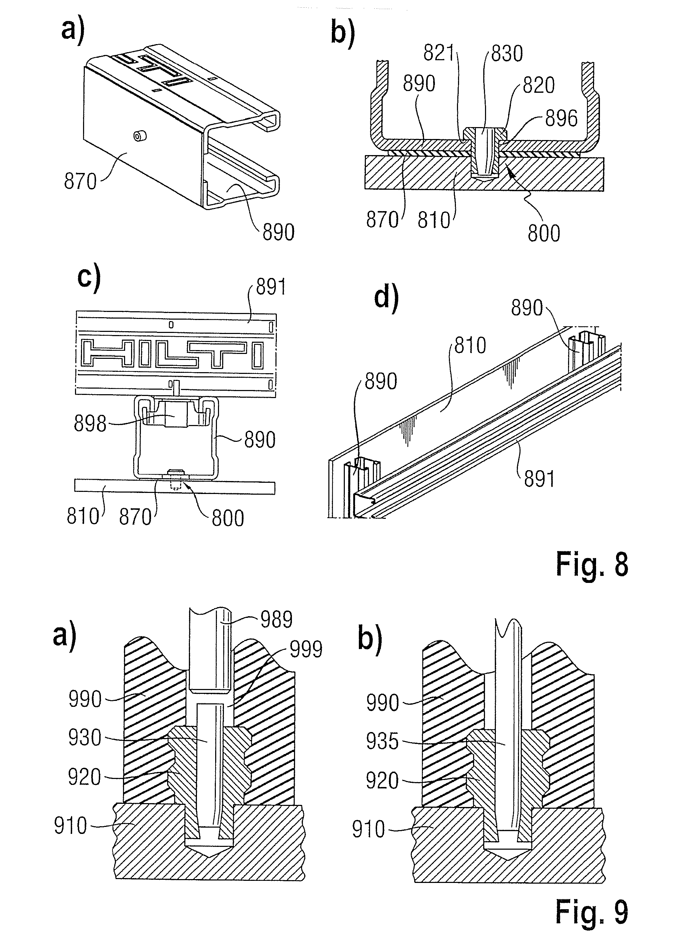

In Fig. 8 ist eine Befestigungsvorrichtung 800 dargestellt, welche eine Hülse 820, einen Dorn 830 und ein Halteelement 890 aufweist. Das Halteelement 890 ist mit einem Durchbruch 896 an einem Absatz 821 der Hülse 820 abgestützt und somit formschlüssig an der Hülse 820 angebracht. Das Halteelement 890 ist als Schiene ausgebildet und dient beispielsweise der Halterung einer weiteren Schiene 891, welche mittels eines Halters 898 an dem Halteelement 890 befestigt ist. Das Halteelement 890 weist ein Dichtelement 870 auf für eine Abdichtung zwischen dem Halteelement 890 und einem Untergrund 810 auf.

In Fig. 9 ist eine Befestigungsvorrichtung 900 im Querschnitt dargestellt, welche eine Hülse 920, einen Dorn 930 und ein Halteelement 990 zur Verankerung an einem Untergrund 910 aufweist. Das Halteelement 990 besteht aus Kunststoff und ist an die Hülse 920 angespritzt und somit materialschlüssig an der Hülse 920 angebracht. Ein Eintreiben des Dorns 930 in die Hülse 920 geschieht bei einem Halteelement, welches über die Hülse entgegen der Befestigungsrichtung hinaus steht, indem ein Eintreibwerkzeug 989 in eine Aussparung 999 des Halteelementes 990 eintaucht (Fig. 9a) oder mit Hilfe eines verlängerten Dorns 935, welcher über das Haltelement hinausragt (Fig. 9b).

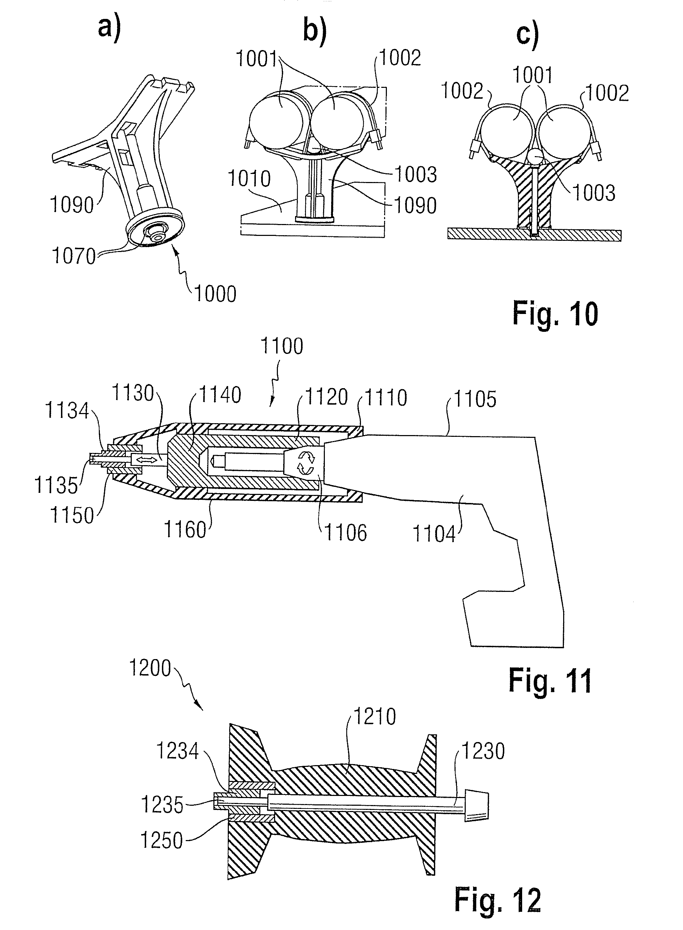

In Fig. 10 ist eine Befestigungsvorrichtung 1000 mit einem angespritzten Halteelement 1090 aus Kunststoff dargestellt. Das Halteelement 1090 dient beispielsweise der Halterung von Kabeln 1001 in einem gewünschten Abstand von einem Untergrund 1010. Hierzu weist das Haltelelement 1090 zwei Kabelbinder 1002 auf, die vorzugsweise an dem Halteelement 1090 befestigt (Fig. 10b) oder an das Halteelement 1090 angespritzt sind (Fig. 10c). Eine Haltestange 1003 dient einer Abstützung der Kabel 1001 gegen ein Durchhängen. Weiterhin weist die Befestigungsvorrichtung einen oder mehrere Dichtringe 1070 für eine Abdichtung zwischen dem Halteelement 1090 und dem Untergrund 1010 auf.

In Fig. 11 ist eine Schlagvorrichtung 1100 dargestellt. Die Schlagvorrichtung 1100 umfasst ein Abstützmittel 1110 zur drehfesten Abstützung der Schlagvorrichtung 1100 an einem Gehäuse 1105 einer Bohrmaschine 1104, ein Abgreifmittel 1120 zum Abgreifen einer Drehbewegung eines Bohrfutters 1106 der Bohrmaschine 1104, ein Schlagelement 1130 zur Übertragung von Schlägen auf einen Dorn 1135 eines Befestigungselementes 1134, und ein Schlagwerk 1140 zur Umwandlung einer Drehbewegung des Abgreifmittels 1120 in eine Linearbewegung des Schlagelementes 1130. Das Schlagwerk 1140 ist bevorzugt als Feder-Nocken-Schlagwerk ausgebildet. Weiterhin weist die Schlagvorrichtung 1100 ein Gehäuse 1160 mit einer Aufnahme 1150 für das Befestigungselement 1134 auf. Die drehfeste Abstützung der Schlagvorrichtung 110 an dem Gehäuse 1105 der Bohrmachine 1104 geschieht vorzugsweise durch einen Bajonettverschlusse zwischen dem Abstützmittel 1110 und dem Gehäuse 1105. Weiterhin umfasst die Schlagvorrichtung 1100 ein Untersetzungsgetriebe, welches antriebseitig mit dem Abgreifmittel und abtriebseitig mit dem Schlagwerk verbunden ist.

Mit Hilfe der Schlagvorrichtung 1100 wird erreicht, dass zum Bohren eines Bohrlochs und zum Eintreiben des Dorns in die Hülse eine einzige Bohrmaschine 1104 verwendet werden kann. Dazu wird zunächst die Bohrmaschine 1104, vorzugsweise ein akkubetriebener Elektrobohrer oder -schrauber ohne Schlagfunktion, mit einem Anschlagbohrer bestückt und ein Bohrloch in einem Untergrund erzeugt. Anschliessend wird die Schlagvorrichtung 1100 über den Anschlagbohrer auf die Bohrmaschine 1104 montiert, ein erfindungsgemässes Befestigungselement in die Aufnahme 1150 eingeführt und im Untergrund verankert, indem das Schlagelement 1130 den Dorn 1135 in die Hülse des Befestigungselementes 1134 eintreibt. Die Schlagenergie ist dabei nicht notwendigerweise so gross, dass der Dorn in einem einzigen Schlag eingetrieben werden kann. Bevorzugt wird der Dorn vielmehr mit mehreren, kurz aufeinander folgenden Schlägen eingetrieben. Die gewünschte Schlagfrequenz und -energie wird mit Hilfe des Untersetzungsgetriebes bestimmt.

Bevorzugt sind die Dimensionen des Schlagwerks und des Befestigungselementes so aufeinander abgestimmt, dass das Schlagelement nicht auf die Hülse schlage kann, sondern kurz davor stoppt, so dass der Dorn immer eine gewünschte Eintreibtiefe erhält, ohne dass die Hülse mechanisch belastet oder beschädigt wird.

Bei Befestigungsvorrichtungen mit Dichtelementen ist es wünschenswert, die Hülse während des Eintreibens des Dorns mit einer vorbestimmten Kraft gegen den Untergrund zu drücken. Dies wird bevorzugt dadurch bewerkstelligt, dass das Schlagwerk ein Krafterkennungsmittel zur Erkennung einer Anpresskraft des Befestigungselementes an einen Untergrund und Kupplungsmittel aufweist, welche den Kraftfluss vom Abgreifmittel zum Schlagelement unterbrechen, solange die Anpresskraft des Befestigungselementes an den Untergrund kleiner ist als eine vorbestimmte Kraft, und welche den Kraftfluss vom Abgreifmittel zum Schlagelement schliessen, wenn die Anpresskraft des Befestigungselementes an den Untergrund mindestens so gross ist wie die vorbestimmte Kraft. Somit wird die Schlagbewegung erst dann durchgeführt, wenn die Anpresskraft die vorbestimmte Kraft erreicht. Die vorbestimmte Kraft ist vorzugsweise eine solche Kraft, bei der das Dichtelement seine Dichtwirkung entfaltet.

In Fig. 12 ist eine manuelle Schlagvorrichtung 1200 mit einem Handgriff 1210, einem Schlagelement 1230 und einer Aufnahme 1250 dargestellt. In die Aufnahme 1250 ist ein Befestigungselement 1234 mit einem Dorn 1235 einführbar.

Bei nicht dargestellten Ausführungsbeispielen wird für den Eintreibvorgang des Dorns eine Schlagbohrmaschine mit ausgeschalteter Drehfunktion oder ein gas-, pulver-, druckluft- oder akkubetriebenes Setzgerät verwendet.

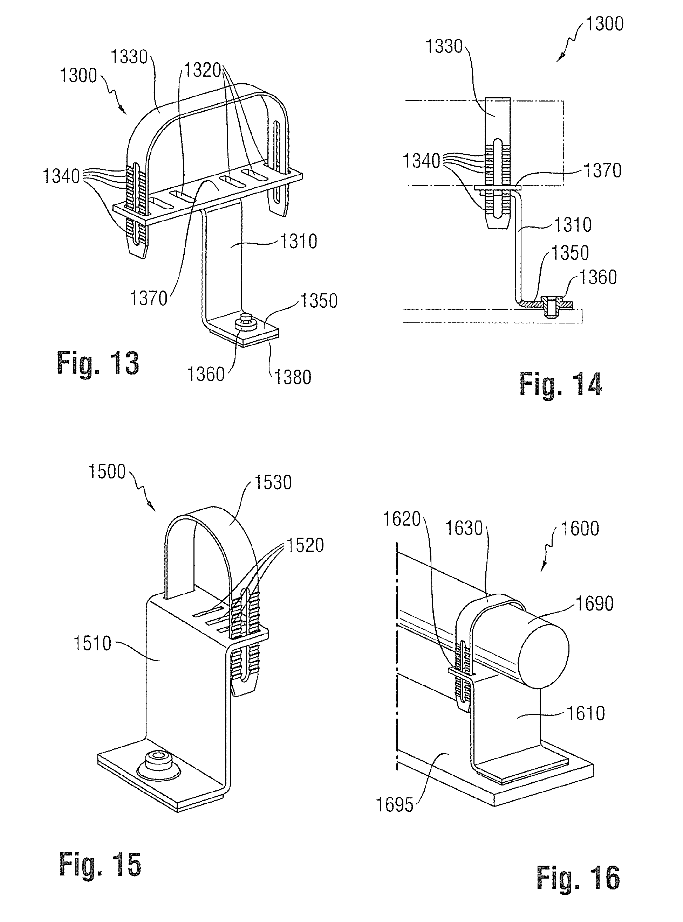

In Fig. 13 ist eine Spannvorrichtung 1300 zum Spannen von Gegenständen wie beispielsweise Kabeln oder Rohren dargestellt. Die Spannvorrichtung 1300 weist ein Halteelement 1310 mit Durchführungen 1320 und ein Spannelement 1330 auf. Das Spannelement 1330 ist mit beiden Enden in die Durchführungen 1320 einführbar und verrastbar. Das Halteelement ist aus Metall, insbesondere als Stanz-/Biegeteil, oder aus Kunststoff gefertigt. Das Spannelement 1330 ist als längliches Band aus Metall, insbesondere Stahl, oder Kunststoff ausgebildet und weist eine Vielzahl von Rastnasen 1340 auf, welche in zwei Reihen angeordnet sind und in den Durchführungen 1320 einrasten. Je nach Anzahl und Durchmesser der zu verspannenden Kabel oder Rohre wird das Spannelement 1330 in die passende Durchführung 1320 eingeführt und verrastet. Die Vorrichtung ist also für viele verschiedene Abmessungen der zu verspannenden Gegenstände einsetzbar.

Das Halteelement 1310 weist eine Befestigungsstelle 1350 auf, an der das Halteelement 1310 mit Hilfe eines Befestigungselementes 1360 an einem nicht gezeigten Untergrund befestigbar ist. Das Befestigungselement 1360 ist vorzugsweise bereits an der Befestigungsstelle vormontiert, so dass ein umständliches Montieren der Einzelteile am Ort der Befestigung eingespart werden kann. Aus dem gleichen Grund sind auch das Halteelement 1310 und das Spannelement 1330 vorzugsweise vormontiert, indem ein Ende des Spannelements 1330 bereits in einer Durchführung 1320 verrastet ist, wogegen das andere Ende noch offen ist. Bei nicht dargestellten Ausführungsbeispielen ist das Spannelement mittig an dem Halteelement befestigt und beide Enden sind offen. Auf der zu einem Untergrund weisenden Unterseite der Befestigungsstelle 1350 ist eine Dichtplatte 1380 befestigt, beispielsweise geklebt. Hierdurch wird unter Umständen Korrosion zwischen dem Halteelement und dem Untergrund vermieden. Bei nicht dargestellten Ausführungsbeispielen ist anstelle der Dichtplatte ein O-Ring oder ein an die Form des Halteelements angepasstes Formteil aus einem Elastomer an dem Halteelement vormontiert.

Weiterhin weist das Halteelement 1310 an einem Ende einen Trägerbereich 1370 auf, welcher die Durchführungen 1320 aufweist und am gegenüberliegenden Ende des Halteelements 1310 angeordnet ist. Eine Höhe des Halteelements 1310 beträgt vorzugsweise 40 mm, so dass die verspannten Gegenstände unter Umständen nicht auf dem Untergrund auflegen. So kann eine gegebenenfalls vorhandene Lackierung des Untergrunds beispielsweise erneuert werden, ohne die Gegenstände demontieren zu müssen. Das Befestigungselement 1360 ist beispielsweise gemäss einem der anhand Fig. 1 bis 3 beschriebenen Ausführungsbeispiele ausgebildet und umfasst eine Hülse und einen Dorn, welcher in einen Aufspreizbereich der Hülse eintreibbar ist.

In Fig. 14 ist die Spannvorrichtung 1300 in einem Querschnitt dargestellt. Die Rastnasen 1340 der beiden Reihen sind in einer Längsrichtung des Spannelements 1330 zueinander versetzt angeordnet, so dass der Abstand von einem Rastelement 1340 entlang der Längserstreckung des Spannelements 1330 zum nächsten Rastelement 1340 kleiner als eine Länge jeweils eines Rastelements 1340 ist.

In Fig. 15 ist eine Spannvorrichtung 1500 mit einem Halteelement 1510 und einem Spannelement 1530 dargestellt. Das Spannelement 1530 ist mit einem Ende in einer der Durchführungen 1520 verrastet.

In Fig. 16 ist eine Spannvorrichtung 1600 mit einem Halteelement 1610 und einem Spannelement 1630 dargestellt. Das Spannelement 1630 ist mit einem Ende in einer Durchführung 1620 verrastet, um ein Rohr 1690 zu verspannen und mit Abstand zum Untergrund 1695 zu befestigen.

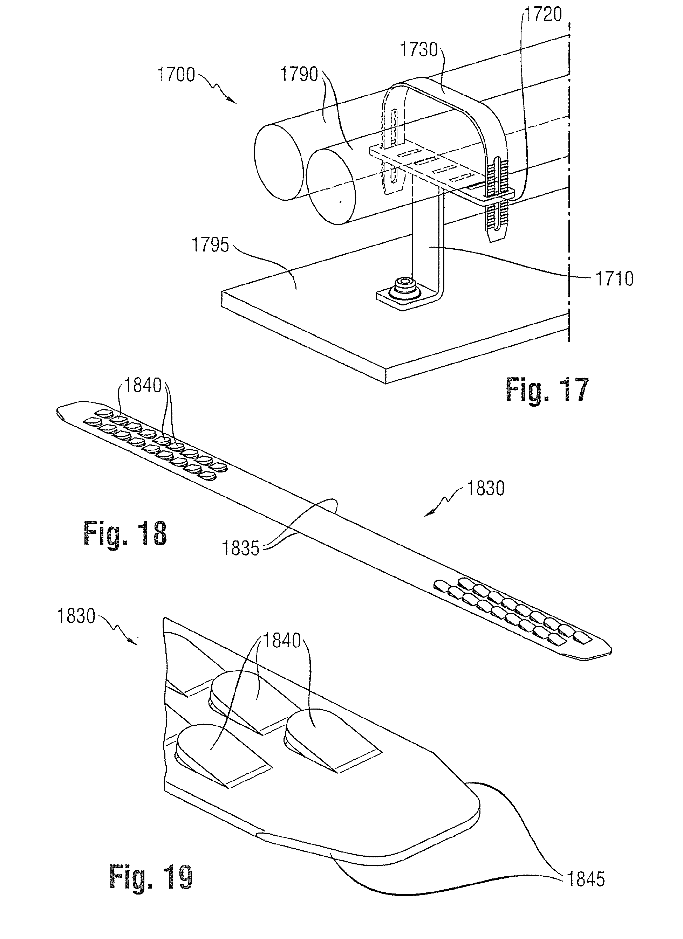

In Fig. 17 ist eine Spannvorrichtung 1700 mit einem Halteelement 1710 und einem Spannelement 1730 dargestellt. Das Spannelement 1730 ist mit einem Ende in einer Durchführung 1720 verrastet, um zwei Rohr 1790 miteinander zu verspannen und mit Abstand zum Untergrund 1795 zu befestigen.

In Fig. 18 ist ein Spannelement 1830 einer nicht weiter gezeigten Spannvorrichtung dargestellt. Das Spannelement 1830 ist als Band ausgebildet und weist schuppenförmig ausgebildete Rastnasen 1840 auf, welche im Bereich der Enden des Spannelements 1830 entlang der Längserstreckung des Spannelements 1830 in zwei Reihen angeordnet sind. Bei nicht dargestellten Ausführungsbeispielen sind die Rastnasen in einer Reihe oder in drei oder mehr Reihen angeordnet. Das Spannelement 1830 weist Längskanten 1835 auf, welche zur Schonung der zu verspannenden Gegenstände abgerundet sind. Bei nicht dargestellten Ausführungsbeispielen ist das Spannelement aus einem kunststoffummanteltem Metall gefertigt, um die zu verspannenden Gegenstände zu schonen.

In Fig. 19 ist eine vergrösserte Darstellung des Spannelements 1830 gezeigt. Die Rastnasen 1840 der beiden Reihen sind in der Längserstreckung des Spannelements 1830 zueinander versetzt angeordnet, so dass der Abstand von einem Rastelement 1840 entlang der Längserstreckung des Spannelements 1830 zum nächsten Rastelement 1840 kleiner als eine Länge jeweils eines Rastelements 1840 ist. Dadurch wird ein annähernd stufenloses Verrasten ermöglicht. Darüber hinaus weist das Ende des Spannelements 1830 Einführschrägen 1845 auf, um ein Einführen in die nicht gezeigten Durchführungen des entsprechenden Halteelements zu vereinfachen.

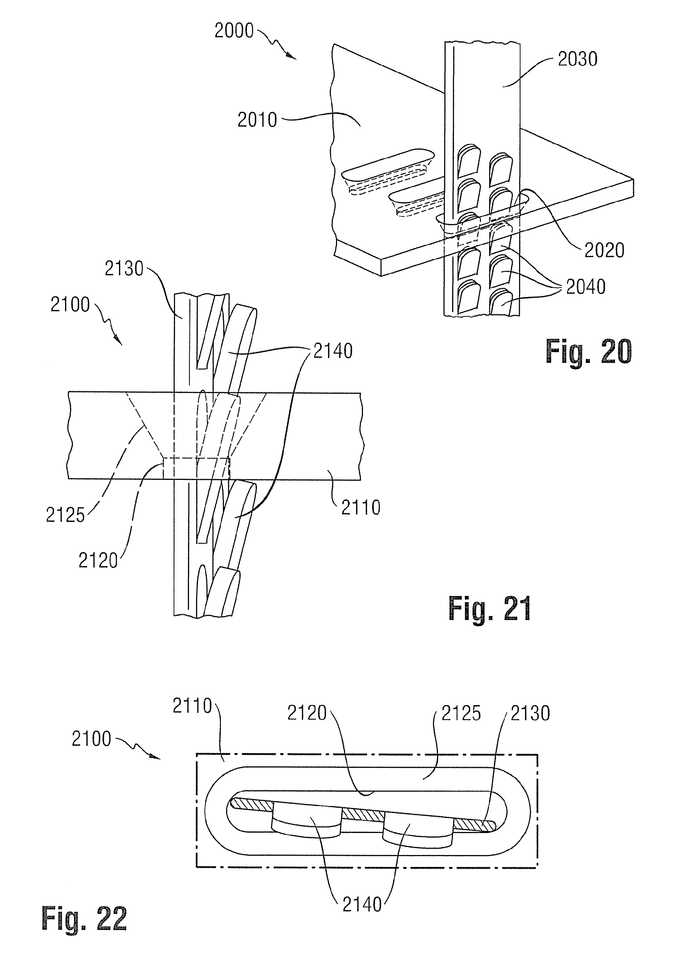

In Fig. 20 ist ein Ausschnitt einer Spannvorrichtung 2000 mit einem Halteelement 2010 und einem Spannelement 2030 gezeigt. Das Spannelement 2030 ist in einer Durchführung 2020 des Halteelements 2010 mit den Rastnasen 2040 verrastet. Hier wird das annähernd stufenlose Verrasten besonders anschaulich.

In Fig. 21 ist ein Ausschnitt einer Spannvorrichtung 2100 mit einem Halteelement 2110 und einem Spannelement 2130 gezeigt. Das Spannelement 2130 ist in einer Durchführung 2120 des Halteelements 2110 mit den schuppenförmig ausgebildeten Rastnasen 2140 verrastet. Die Durchführung 2120 hat einen unnachgiebigen Umfang, an dem die Rastnasen 2140 einrasten, und weist eine Einführschräge 2125 auf, um ein Einführen des Spannelements 2130 zu vereinfachen, welche gleichzeitig als Freistellung für die Rastnasen 2140 dient.

Wie in Fig. 22 zu sehen ist, ist die Breite der Durchführung 2120 derart ausgelegt, dass sich das Spannelement 2130 gerade durch den Schlitz ziehen lässt. Beim Anziehen des Spannelements 2130 gegen die zu verspannenden Gegenstände entsteht eine Kraft, welche das Spannelement 2130 in die Verrastung drückt. Bevorzugt hat das Spannelement 2130 eine inherente Federspannung, welche das Spannelement 2130 aufzurichten versucht, und welche ebenfalls das Spannelement 2130 in die Verrastung drückt.

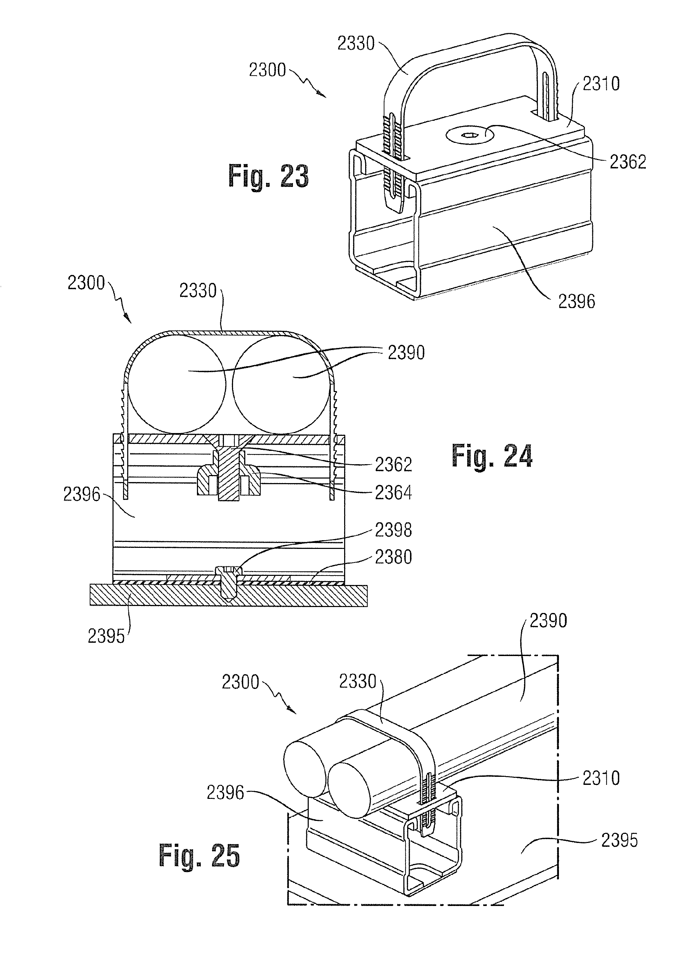

In Fig. 23 ist eine Spannvorrichtung 2300 mit einem Halteelement 2310 und einem Spannelement 2330 dargestellt, welche auf einer Installationsschiene 2395 befestigt ist. Zu diesem Zweck umfasst das Befestigungselement 2360 eine Schraube 2362 und einen mit einer Mutter 2364 versehenen Schlitten auf, welche in Fig. 24 deutlich zu sehen sind.

Fig. 24 zeigt die Spannvorrichtung 2300 in einer Querschnittsansicht, in der auch die verspannten Rohre 2390 dargestellt sind. Die Spannvorrichtung 2300 ist mittels der Schraube 2362 und der Mutter 2364 auf die Installationsschiene 2396 geschraubt, die ihrerseits mit einem weiteren Befestigungselement 2398 am Untergrund 2395 verankert ist. Zwischen der Installationsschiene 2396 und dem Untergrund 2395 ist dabei vorzugsweise eine Dichtplatte 2380 angeordnet.

In Fig. 25 ist die Spannvorrichtung 2300 in einer Schrägansicht dargestellt.

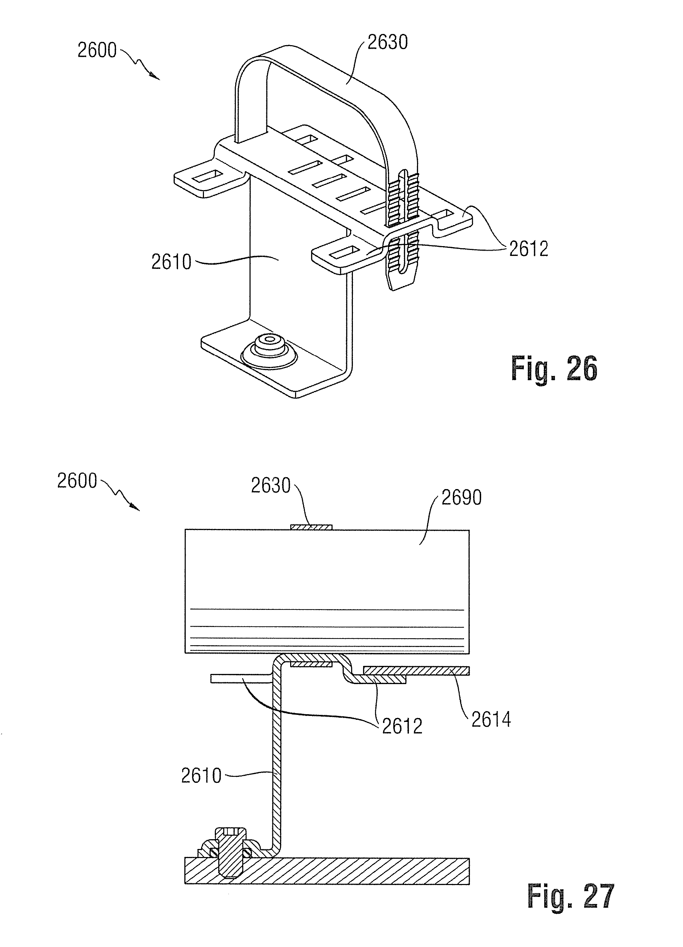

Fig. 26 zeigt eine Spannvorrichtung 2600 mit einem Halteelement 2610 und einem Spannelement 2630. Das Halteelement 2610 weist zusätzliche Befestigungspunkte 2612 auf, an denen nicht gezeigte Trägerschienen befestigbar sind.

Fig. 27 zeigt die Spannvorrichtung 2600 mit dem Halteelement 2610 und dem Spannelement 2630. An den Befestigungspunkten 2612 ist eine Trägerschiene 2614 befestigt, die eine Auflage des von dem Spannelement 2630 umgriffenen Kabels 2690 ermöglicht.

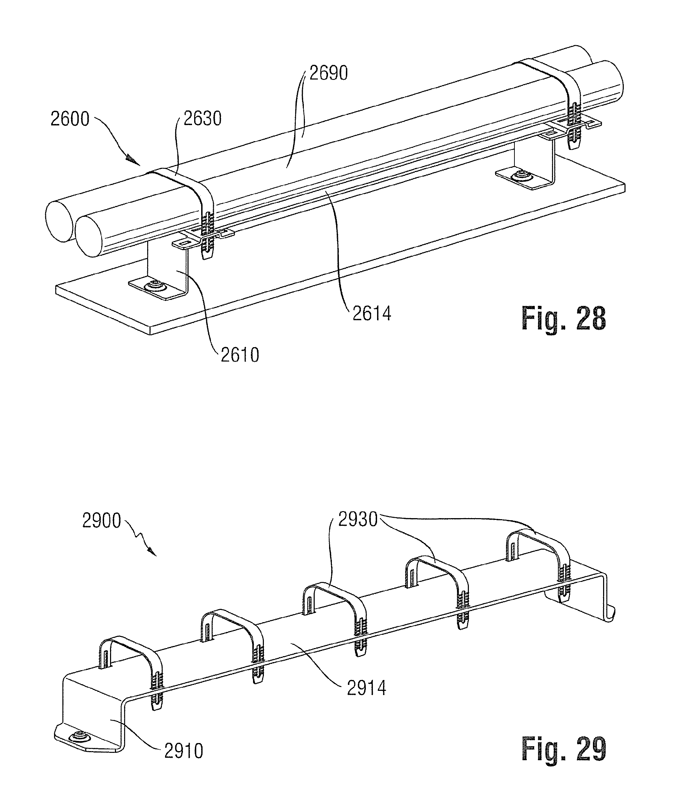

Wie in Fig. 28 zu sehen ist, ist das Kabel 2690 zwischen jeweils zwei Spannvorrichtungen durch die Trägerschiene 2614 unterstützt, ohne frei in der Luft zu hängen. Bei Bedarf ist es möglich, das Kabel 2690 zusätzlich an der Trägerschiene zu fixieren, beispielsweise mittels eines Kabelbinders.

Fig. 29 zeigt eine Spannvorrichtung 2900 mit einem Halteelement 2910 und mehreren Spannelementen 2930. Das Halteelement 2910 weist eine Trägerschiene 2914 auf, welche in das Halteelement 2910 integriert ist.

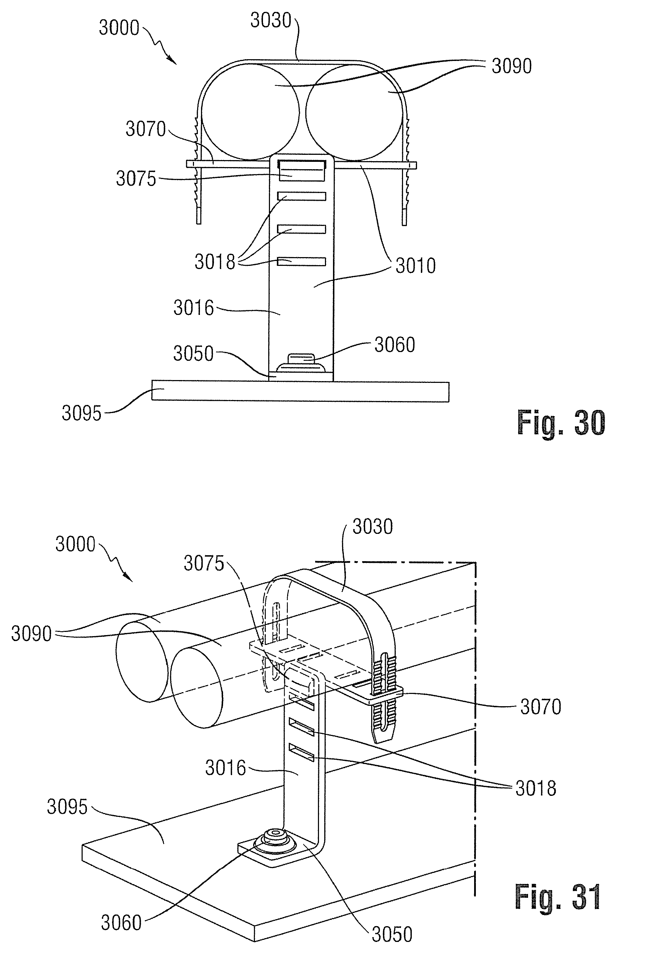

In Fig. 30 ist eine Spannvorrichtung 3000 mit einem Halteelement 3010 und einem Spannelement 3030 zum Verspannen zweier Rohre 3090 dargestellt. Das Halteelement 3010 ist zweiteilig ausgebildet und umfasst einen Ständer 3016 mit einer Befestigungsstelle 3050 sowie einen separaten Trägerbereich 3070. Der Ständer 3016 ist mittels eines Befestigungselements 3060 an einem Untergrund 3095 befestigt und weist mehrere Schlitze 3018 auf. Der Trägerbereich 3070 weist eine Nase 3075 auf, welche in jeden der Schlitze 3018 einhängbar ist, so dass eine höhenverstellbare Spannvorrichtung geschaffen ist.

Fig. 31 zeigt die höhenverstellbare Spannvorrichtung 3000 in einer Schrägansicht.

Die Erfindung wurde anhand von Beispielen einer Vorrichtung zur Befestigung eines ersten Gegenstandes an einem zweiten Gegenstand sowie einem Verfahren für eine solche Befestigung beschrieben. Die Merkmale der beschriebenen Ausführungsformen sind dabei auch beliebig miteinander innerhalb einer einzigen Befestigungsvorrichtung beziehungsweise eines einzigen Herstellungsverfahrens kombinierbar. Es wird darauf hingewiesen, dass die erfindungsgemässen Vorrichtungen und das erfindungsgemässe Verfahren auch für andere Zwecke geeignet sind.

## Patentansprüche

1. Vorrichtung zum Spannen von Gegenständen, mit einem Halteelement und einem Spannelement, wobei das Halteelement Durchführungen aufweist, in welche das Spannelement einführbar und verrastbar ist.

2. Vorrichtung, wobei das Spannelement eine längliche Form aufweist, wobei beide Enden des Spannelements jeweils in eine Durchführung einführbar und verrastbar sind.

3. Vorrichtung, wobei das Spannelement eine Rastnase, insbesondere eine Vielzahl von Rastnasen aufweist.

4. Vorrichtung, wobei die Durchführungen einen unnachgiebigen Umfang aufweisen, gegen den das Rastelement verrastet.

5. Vorrichtung, wobei die Rastelemente in einer Längsrichtung des Spannelements zueinander versetzt angeordnet sind.

6. Vorrichtung, wobei die Durchführungen eine Einführschräge für das Spannelement aufweisen.

7. Vorrichtung, wobei mehrere Durchführungen für ein Ende des Spannelements vorgesehen sind.

8. Vorrichtung, wobei das Halteelement eine Befestigungsstelle aufweist, an der das Halteelement an einem Untergrund befestigbar ist.

9. Vorrichtung, wobei das Halteelement einen Trägerbereich aufweist, welcher die Durchführungen aufweist.

10. Vorrichtung, wobei die Befestigungsstelle und der Trägerbereich an gegenüberliegenden Seiten des Halteelements angeordnet sind.

11. Vorrichtung, wobei die Vorrichtung ein Befestigungselement aufweist.

12. Vorrichtung, wobei das Halteelement und das Spannelement als vormontierte Einheit ausgebildet sind.

13. Vorrichtung nach einem der vorhergehenden Ansprüche, wobei das Befestigungselement eine Hülse und einen Dorn umfasst, wobei die Hülse ein erstes Lastangriffsmittel für den ersten Gegenstand und ein Widerlager für eine Aussenfläche des zweiten Gegenstands sowie einen Durchgang aufweist, wobei der Durchgang einen zu dem ersten Lastangriffsmittel benachbarten Einführabschnitt und einen Aufspreizabschnitt aufweist, wobei der Aufspreizabschnitt eine die Aussenabmessungen des Dornes unterschreitende Verengung aufweist.

14. Vorrichtung nach einem der vorhergehenden Ansprüche, wobei sich die Verengung zumindest bis zu jener Stelle des Durchgangs erstreckt, welche zu dem Widerlager am nächsten benachbart ist.

15. Vorrichtung nach einem der vorhergehenden Ansprüche, wobei das Befestigungselement einen Schlitten zur Befestigung an einer Schiene aufweist.
